# EUROPÄISCHE PATENTANMELDUNG

(11) **EP 2 146 105 A2**
(43) Veröffentlichungstag der Anmeldung: **20.01.2010**
(21) Anmeldenummer: 09008894.9
(22) Anmeldetag: 08.07.2009
(51) Int. Cl.: F16B 35/04

(54) **Schraube und damit hergestellte Verbindung**

(30) Priorität: 14.07.2008 DE 202008009436 U
(71) Anmelder: SFS Handels Holding AG, 9435 Heerbrugg (CH)
(72) Erfinder: Spirig, Rudolf, 9443 Widnau (CH)

(57) **Zusammenfassung**

Beschrieben ist eine Schraube mit zugeordnetem Dübel zur Verbindung eines Bauteils, insbesondere eines Teils einer Küchenkombination, mit einem Gebäudeteil. Die Schraube weist einen Schaft mit wenigstens einem angeformten vorderen Gewindeabschnitt zum Eindrehen in den Dübel auf. In der Verbindung zwischen dem Bauteil und dem Gebäudeteil ist eine Schalldämmeinrichtung angeordnet. Als Schalldämmeinrichtung ist der Dübel als ein Schallschutzdübel (14) ausgebildet. Der Schaft (18) weist einen hinteren Gewindeabschnitt (24) mit größerem Außendurchmesser (Dgg) als der vordere Gewindeabschnitt (20) zum Eindrehen in ein Loch (28) in dem zu befestigenden Bauteil (12) auf und der hintere Gewindeabschnitt (24) ist ebenso wie der vordere Gewindeabschnitt (20) an dem Schaft (18) angeformt.

## Beschreibung

Die Erfindung betrifft eine Schraube mit zugeordnetem Dübel zur Verbindung eines Bauteils, insbesondere eines Teils einer Küchenkombination, mit einem Gebäudeteil, wobei die Schraube einen Schaft mit wenigstens einem angeformten vorderen Gewindeabschnitt zum Eindrehen in den Dübel aufweist und wobei in der Verbindung zwischen dem Bauteil und dem Gebäudeteil eine Schalldämmeinrichtung angeordnet ist. Außerdem betrifft die Erfindung eine Verbindung zwischen einem Bauteil und einem Gebäudeteil.

Bei der schalldämmenden Montage von Küchen (Schweizer Maß-System für Küchen, SMS) werden die Schrauben im Unterbau-Möbel, Sockel und Oberbau-Möbel so eingesetzt, dass jede Befestigungs- oder Berührungsstelle schallisoliert ist. Die schalldämmende Montage wird zur Erhöhung des Wohnkomforts von der Bauherrschaft (oder von Bauvorschriften) verlangt, damit sich haustechnische Geräusche nicht als Körperschall im Gebäude ausbreiten und als Luftschall abgestrahlt werden. Durch die schalldämmende Montage werden solche Störungen vermieden, indem Trägheitskräfte durch konstruktive Vorkehrungen klein gehalten und Übertragungen von Schwingungen durch elastische Lagerung (akustische Entkoppelung der haustechnischen Anlagen vom übrigen Baukörper) eingeschränkt werden. Typische Quellen haustechnischer Geräusche sind sanitäre Installationen (Frischwasser, Abwasser, Hantieren an Waschtischen), Kücheneinrichtungen (Türen und Schubladen in Küchenmöbeln, Hantieren auf Arbeitsflächen, Küchenmaschinen), Heizungen, Liftanlagen, Ventilatoren, elektrische Leistungsschalter und Transformatoren. Näheres hierzu findet sich in der Schweizer Norm SN 520 181 oder SIH 181; 2006 Bauwesen, Schallschutz im Hochbau, Schweizerischer Ingenieur- und Architektenverein, CH-8039 Zürich. Damit keine Schallbrücken entstehen, die die Schallisolation überbrücken und dazu führen würden, dass geforderte Schalldämmwerte nicht mehr erreicht werden, werden bei der schalldämmenden Montage von Küchenkombinationen die Schrauben in dem Gebäudeteil (Wand, Decke oder Boden) zwar mit einem üblichen Mauerdübel verankert, zwischen der Schraube und dem zu befestigenden Bauteil wird jedoch eine Gummitülle angeordnet. Zusätzlich wird anschließend an den Mauerdübel, der wesentlich tiefer als bündig gesetzt wird, noch ein zusätzlicher Gummidübel eingefügt, der die Schraube im Bereich des Mauerwerks zwar umschließt, im Mauerwerk selbst aber kaum Schalldämpfungswirkung entwickeln kann, weil die Schraube über den Mauerdübel fest in dem Gebäudeteil verankert wird. Ferner werden zwischen dem Bauteil und dem Gebäudeteil Gummistreifen eingefügt. Generell wird so eine unisolierte Berührung zwischen Schraube und zu befestigendem Bauteil einerseits sowie zwischen zu befestigendem Bauteil und Gebäudeteil andererseits vermieden. Diese schalldämmende Montage von Küchenkombinationen ist offenbar aufwändig und umständlich und somit unerwünscht kosten- und arbeitsintensiv.

Aus der DE 198 54 162 A1 ist es zwar bereits bekannt, eine schwingungsdämpfende Hülse mit körperschallschluckenden Eigenschaften einzusetzen, diese ist jedoch ebenfalls sehr aufwändig und wäre für eine Durchsteckmontage ungeeignet. Die schwingungsdämpfende Hülse hat nämlich einen zu großen Durchmesser, als dass sie durch das Loch in dem zu befestigenden Bauteil hindurch in eine Bohrung in dem Gebäudeteil eingeführt werden könnte. Es ist zwar in dieser Druckschrift in Fig. 6 die Möglichkeit einer Durchsteckmontage angedeutet, in diesem Fall wird aber eine Distanzschraube verwendet, die unterhalb des Kopfes eine zusätzliche Hülse aufweist, welche die Differenz im Durchmesser zwischen der Schraube und dem für diese im Durchmesser zu großen Loch in dem Gebäudeteil ausgleicht. In diesem Fall ist offenbar die zusätzliche Hülse mit einem Außengewinde versehen, das mit dem Loch in dem zu befestigenden Bauteil in Gewindeeingriff gelangt.

Aus der DE 42 22 904 A1 ist eine feuerhemmende Körperschall-Entkopplungsplatte bekannt, die an einer Wand befestigt wird, indem Schrauben in Gummidübel eingeschraubt werden, die sich in Bohrungen der Wand befinden. Zur Herstellung eines feuerhemmenden Komplettsystems wird auf der Körperschall-Entkopplungsplatte eine Schall-Isolierplatte mit Hilfe von nagelförmigen Befestigungselementen fixiert. Diese Art der schalldämmenden Montage ist zum Verbinden von Teilen einer Küchenkombination mit einem Gebäudeteil offenbar ungeeignet.

Aus der DE 43 21 153 A1 und der EP 0 935 075 A1 sind Distanzschrauben bekannt, die eine Durchsteckmontage ermöglichen. Bei diesen Schrauben ist aber der hintere Gewindeabschnitt größeren Durchmessers jeweils als eine zusätzliche Gewindehülse ausgebildet, die an dem hinteren Schaftende nachträglich unverlierbar befestigt wird. Diese Hülse verteuert die Verschraubung wesentlich. Im Falle der EP 0 935 075 A1 ist eine Durchsteckmontage überhaupt nur möglich, weil ein extrem schlanker Dübel mit geringer Wandstärke eingesetzt wird. Im Falle der DE 43 21 153 A1 ist eine Durchsteckmontage nur mit einem herkömmlichen Mauerdübel möglich, weil dieser einen kleinen Außendurchmesser hat. Eine schalldämmende Montage ist in beiden Fällen nicht möglich.

Aus der CH 614 761 A5 ist es zwar bekannt, eine Doppelschraube mit einem hinteren Gewindeabschnitt, der einen wesentlich größeren Durchmesser als der vordere Gewindeabschnitt hat, einstückig herzustellen, jedoch ist eine Durchsteckmontage nicht möglich. Die Mauer muss vorab schon mit Dübeln versehen sein, bevor Verkleidungselemente mit Hilfe der Doppelschraube daran befestigt werden können.

Aufgabe der Erfindung ist es, eine Schraube mit zugeordnetem Dübel der eingangs genannten Art so auszubilden, dass sich bei dem Verbinden eines Bauteils mit einem Gebäudeteil eine schalldämmende Montage weniger kapitalund arbeitsintensiv durchführen lässt. Außerdem soll sich die Verbindung zwischen einem Bauteil und einem Gebäudeteil weniger kapital- und arbeitsintensiv herstellen lassen.

Diese Aufgabe ist ausgehend von einer Schraube mit zugeordnetem Dübel der eingangs genannten Art dadurch gelöst, dass als Schalldämmeinrichtung der Dübel als ein Schallschutzdübel ausgebildet ist, dass der Schaft einen hinteren Gewindeabschnitt mit größerem Außendurchmesser als der vordere Gewindeabschnitt zum Eindrehen in ein Loch in dem zu befestigenden Bauteil aufweist und dass der hintere Gewindeabschnitt ebenso wie der vordere Gewindeabschnitt an dem Schaft angeformt ist.

Die schalldämmende Montage von Küchenkombinationen gestaltet sich mit der erfindungsgemäßen Kombination aus Schraube und zugeordnetem Schallschutzdübel weniger kapital- und arbeitsintensiv, weil sich die Montage als eine einfache Durchsteckmontage gestaltet, bei der sich ein Loch in dem zu befestigenden Bauteil und eine Bohrung in dem Gebäudeteil in einem Arbeitsgang und mit gleichem Durchmesser vorbohren lassen. Anschließend braucht dann nur noch die Schraube mit (vorzugsweise bereits vormontiertem) Schallschutzdübel eingeführt und eingedreht zu werden. Das verringert den Arbeitsaufwand für die Montage erheblich. Darüber hinaus sind zusätzliche Teile wie Gummitüllen überflüssig. Dadurch verringert sich der für die Montage erforderliche Kapitalaufwand.

Die erfindungsgemäße Schraube wird mit ihrem hinteren Gewindeabschnitt in das in dem zu befestigenden Bauteil vorgebohrte Loch eingedreht und dabei mit dem zu befestigenden Bauteil in Gewindeeingriff gebracht. Das vorgebohrte Loch ist so bemessen, dass der Schallschutzdübel bei der Durchsteckmontage durch dieses Loch hindurchgeführt werden kann und dass andererseits der hintere Gewindeabschnitt in dem Loch des zu befestigenden Bauteils fest verankert werden kann. Die Schraube hat so einen hinteren Gewindeabschnitt, der es ermöglicht, die Schraube in einem Arbeitsgang, vorzugsweise durch Kaltmassivumformung, herzustellen, wobei zuerst der Schaft mit einem verdickten hinteren Abschnitt und einem dünneren vorderen Abschnitt hergestellt wird und anschließend die Gewinde des vorderen und des hinteren Gewindeabschnittes durch Fräsen, Walzen oder Rollen hergestellt werden. Damit kann eine schnellere Fertigung der Schraube mit hoher Qualität und niedrigeren Herstellungskosten erfolgen. Nach Kenntnis der Anmelderin gibt es im Stand der Technik keine Schraube, die zusammen mit einem zugeordneten Schallschutzdübel eine Durchsteckmontage erlauben würde. Schallschutzdübel sind an sich bekannt. Ein für die Erfindung geeigneter Schallschutzdübel ist beispielsweise der Schallschutzdübel Typ SD 10 (9720) der Firma Fischer mit einem Außendurchmesser von 10 mm
(http://shop.dabaq.ch/shop/art?aid=100014366&lanqid=1). Er erlaubt den Einsatz einer erfindungsgemäßen Schraube, bei der der vordere Gewindeabschnitt einen Außendurchmesser von 2,3 - 6,0 mm hat. Ein bevorzugtes Ausführungsbeispiel der Schraube nach der Erfindung hat einen vorderen Gewindeabschnitt mit einem Außendurchmesser von 5 bis 6 mm und vorzugsweise von 6 mm und einen hinteren Gewindeabschnitt mit einem Außendurchmesser von 12 mm. Nach der Norm wird für ein zu schneidendes metrisches Innengewinde für eine Schraube M12 ein Loch mit einem Durchmesser von 9,9 mm vorgebohrt. Da der Schallschutzdübel zusammendrückbar ist, ist ein mit einem Durchmesser von 10 mm vorgebohrtes Loch ausreichend.

Die erfindungsgemäße Verbindung zwischen einem Bauteil und einem Gebäudeteil ist mit einer erfindungsgemäßen Schraube mit zugeordnetem Schallschutzdübel hergestellt.

Vorteilhafte Ausgestaltungen der Schraube und der Verbindung nach der Erfindung bilden die Gegenstände der Unteransprüche.

In einer Ausgestaltung der Schraube nach der Erfindung beträgt das Verhältnis des Außendurchmessers des hinteren Gewindeabschnittes zu dem Außendurchmesser des vorderen Gewindeabschnittes wenigstens 2:1. Das ermöglicht ohne Weiteres die Herstellung der Schraube nach der Erfindung in Kaltmassivumformtechnik und gewährleistet die angestrebte Durchsteckmontage.

In einer weiteren Ausgestaltung der Schraube nach der Erfindung weist der Schaft zwischen den beiden Gewindeabschnitten einen gewindefreien Abschnitt auf. Das erleichtert die Herstellung der Schraube nach der Erfindung, weil Gewindeabschnitte lediglich an den beiden Enden des Schaftes hergestellt zu werden brauchen.

In einer weiteren Ausgestaltung der Schraube nach der Erfindung hat der gewindefreie Abschnitt einen Durchmesser, der größer als der Außendurchmesser des vorderen Gewindeabschnittes und kleiner als der Kerndurchmesser des hinteren Gewindeabschnittes ist. Das erleichtert nicht nur die Herstellung der erfindungsgemäßen Schraube, sondern auch deren Montage.

In einer weiteren Ausgestaltung der Schraube nach der Erfindung weist der vordere Gewindeabschnitt ein Holz-, Spanplatten, oder Blechgewinde auf. Entsprechend kann in einer weiteren Ausgestaltung der Schraube nach der Erfindung der hintere Gewindeabschnitt ein Holz-, Spanplatten- oder Blechgewinde aufweisen. Das ermöglicht eine zweckmäßige Anpassung der Gewindeabschnitte an die in der Praxis vorkommenden Werkstoffpaarungen von Gebäudeteil und zu befestigendem Bauteil.

In einer weiteren Ausgestaltung der Schraube nach der Erfindung weisen die Gewindeabschnitte die gleiche Steigung auf. Das erleichtert die Herstellung und die Fixierung des zwischen dem zu befestigenden Bauteil und dem Gebäudeteil gewünschten Abstands.

In einer weiteren Ausgestaltung der Schraube nach der Erfindung ist der Schallschutzdübel auf der Schraube vormontiert. Das erleichtert die Durchsteckmontage und stellt sicher, dass die erfindungsgemäße Schraube mit dem richtigen Schallschutzdübel montiert wird.

In einer Ausgestaltung der Verbindung nach der Erfindung ist das Loch für den hinteren Gewindeabschnitt der Schraube in dem Bauteil mit einem Durchmesser vorgebohrt worden, der höchstens gleich dem Außendurchmesser des Schallschutzdübels ist, und eine Bohrung in dem Gebäudeteil für den Schallschutzdübel hat einen Durchmesser, der gleich dem Durchmesser des Loches in dem Bauteil ist. Das erleichtert die Montage, weil das Loch in dem zu befestigenden Bauteil und die Bohrung in dem Gebäudeteil in ein und demselben Bohrarbeitsgang herstellbar sind.

In weiteren Ausgestaltungen der Verbindung nach der Erfindung ist die Verbindung an einem Gebäudeteil hergestellt, das mindestens teilweise aus einem Steinbaustoff besteht, und an einem Bauteil, das mindestens teilweise aus einem Holzbaustoff besteht. Das ist der zweckmäßige Einsatz der erfindungsgemäßen Verbindung zum Beispiel bei der schalldämmenden Montage einer Küchenkombination, wobei in diesem Fall das Bauteil ein Oberteil oder ein Unterteil der Küchenkombination ist.

Ausführungsbeispiele der Erfindung werden im Folgenden unter Bezugnahme auf die Zeichnungen näher beschrieben.

Es zeigt
- Fig. 1: ein mit einer erfindungsgemäßen Schraube und einem Schallschutzdübel an einem Gebäudeteil zu montierendes Bauteil, wobei der Schallschutzdübel auf der Schraube vormontiert ist und die Schraube mit dem Schallschutzdübel in einer ersten Phase einer Durchsteckmontage gezeigt ist,
- Fig. 2: eine zweite Phase der Durchsteckmontage der Schraube mit vormontiertem Schallschutzdübel nach Fig. 1, die bis in den Bereich zwischen dem Bauteil und dem Gebäudeteil eingeführt ist,
- Fig. 3: eine dritte Phase der Durchsteckmontage der Schraube mit vormontiertem Schallschutzdübel nach Fig. 1, in der der Schallschutzdübel in eine Bohrung in dem Gebäudeteil eingeführt ist,
- Fig. 4: eine vierte und letzte Phase der Durchsteckmontage, in welcher die Schraube mit ihren beiden Gewindeabschnitten in den Schallschutzdübel und in das zu befestigende Bauteil eingeschraubt ist, und
- Fig. 5: die gleiche Verbindung wie in den Fig. 1 - 4, bei der aber das zu befestigende Bauteil anders ausgebildet ist.

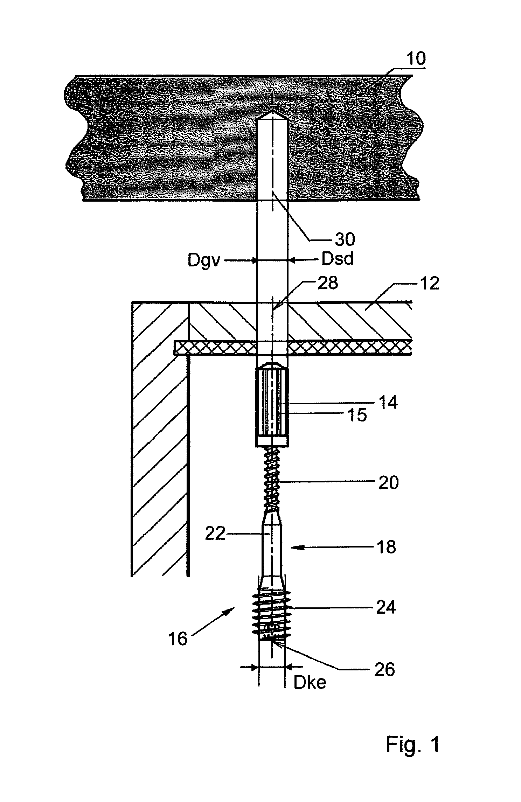

Fig. 1 zeigt einen Gebäudeteil 10, an welchem ein Bauteil 12 mit Abstand und schalldämmend montiert werden soll. Bei dem Bauteil 12 kann es sich beispielshalber um ein Unterbau-Möbel oder ein Oberbau-Möbel einer Küchenkombination handeln, wie eingangs erläutert. In dem hier beschriebenen Ausführungsbeispiel wird zur schalldämmenden Montage zwischen dem Bauteil 12 und dem Gebäudeteil 10 eine Schalldämmeinrichtung angeordnet, die lediglich aus einem Schallschutzdübel 14 besteht, welchem erfindungsgemäß eine besonders ausgebildete Schraube 16 zugeordnet ist, die eine Durchsteckmontage ermöglicht.

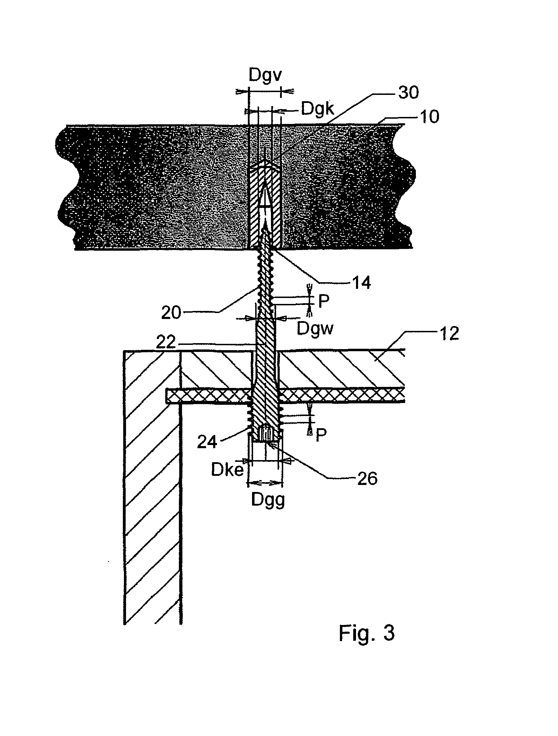

Die Schraube 16, die in Fig. 3 ebenso wie der Schallschutzdübel 14 in einer Längsschnittansicht gezeigt ist, weist einen Schaft 18 auf. An dem Schaft 18 ist ein vorderer Gewindeabschnitt 20 zum Eindrehen in den Schallschutzdübel 14 angeformt. Anschließend an den vorderen Gewindeabschnitt 20 hat der Schaft 18 einen gewindefreien Abschnitt 22. Anschließend an den gewindefreien Abschnitt 22 ist an dem Schaft 18 ein hinterer Gewindeabschnitt 24 angeformt.

Der vordere Gewindeabschnitt 20 hat einen Außendurchmesser Dgk. Der hintere Gewindeabschnitt 24 hat einen Außendurchmesser Dgg, der größer als der Außendurchmesser Dgk ist. Bevorzugt beträgt das Verhältnis des Außendurchmessers Dgg des hinteren Gewindeabschnittes 24 zu dem Außendurchmesser Dgk des vorderen Gewindeabschnittes 20 wenigstens 2:1. Das Gewinde des hinteren Gewindeabschnittes 24 hat einen Kerndurchmesser Dke. Der gewindefreie Abschnitt 22 des Schaftes 18 hat einen Durchmesser Dgw, der größer als der Außendurchmesser Dgk des vorderen Gewindeabschnitts 20 und kleiner als der Kerndurchmesser Dke des hinteren Gewindeabschnitts 24 ist. Das Gewinde des vorderen Gewindeabschnittes 20 und das Gewinde des hinteren Gewindeabschnittes 24 weisen die gleiche Steigung P auf. Die Schraube 16 hat einen Innenkraftangriff 26, beispielshalber hier einen Innensechskant.

Der Schallschutzdübei 14 hat einen Außendurchmesser Dsd (Fig. 1). Für den hinteren Gewindeabschnitt 24 wird ein Loch 28 in dem Bauteil 12 vorgebohrt, dessen Durchmesser Dgv höchstens gleich dem Außendurchmesser Dsd des Schallschutzdübels 14 ist. Ebenso hat der Gebäudeteil 10 eine Bohrung 30 für den Schallschutzdübel 14, deren Durchmesser gleich dem Durchmesser Dgv des Loches 28 in dem Bauteil 12 ist. Der eingangs erwähnte Schallschutzdübel der Firma Fischer hat an seiner Außenseite zusätzliche Längsrippen 15. Der Außendurchmesser Dsd des Schallschutzdübels 14 wird diametral zwischen den Längsrippen 15 gemessen. Der äußere Teil des Schallschutzdübels 14 besteht aus Gummi, weshalb sich die Längsrippen 15 beim Setzen des Schallschutzdübels zusammendrücken lassen.

Der Vorgang der schalldämmenden Montage des Bauteils 12 an dem Gebäudeteil 10 wird nun näher betrachtet. Fig. 1 zeigt eine Schraube 16, auf der ein Schallschutzdübel 14 vormontiert ist. In Fig. 1 ist eine erste Phase einer Durchsteckmontage der vormontierten Einheit aus Schraube 16 und Schallschutzdübel 14 gezeigt. Zuvor ist in einem vorbereitenden Bohrarbeitsgang das Loch 28 in dem Bauteil 12 gebohrt worden und gleich anschließend ist in demselben Bohrarbeitsgang die Bohrung 30 in dem Gebäudeteil 10 hergestellt worden. In Fig. 1 ist die vormontierte Einheit aus Schraube 16 und Schallschutzdübel 14 vor dem Einführen in das Loch 28 dargestellt. Bei dem Hindurchführen des Schallschutzdübels 14 durch das Loch 28 drücken sich, wie erwähnt, die Längsrippen 15 zusammen. Der in Fig. 1 gezeigte Abstand zwischen dem Bauteil 12 und dem Gebäudeteil 10 wird auf den gewünschten Wert eingestellt, spätestens nachdem das Loch 28 und die Bohrung 30 hergestellt worden sind.

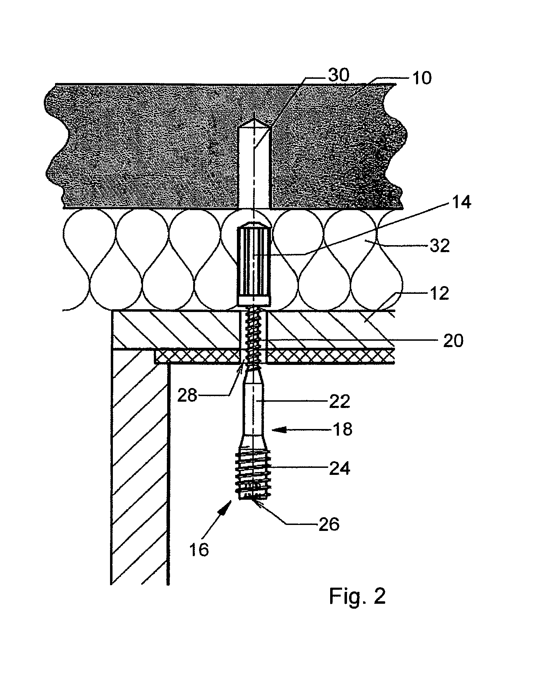

Fig. 2 zeigt eine zweite Phase der Durchsteckmontage der Schraube 16 mit dem vormontierten Schallschutzdübel 14 nach Fig. 1, die bis in den Bereich zwischen dem Bauteil 12 und dem Gebäudeteil 10 eingeführt ist. Der Schallschutzdübel 14 ist vor der Bohrung 30 positioniert. Zur weiteren Verbesserung der Schalldämmung ist in dem hier beschriebenen Ausführungsbeispiel gemäß der Darstellung in Fig. 2 ein schalldämmendes Füllelement 32 (z.B. aus Steinwolle) zwischen dem Gebäudeteil 10 und dem Bauteil 12 angebracht, das bei der Durchsteckmontage mit dem Schallschutzdübel 14 durchstoßen werden kann. Der vordere Gewindeabschnitt 20 und der hintere Gewindeabschnitt 24 weisen jeweils ein Holz-, Spanplatten- oder Blechgewinde auf. In dem hier dargestellten Ausführungsbeispiel handelt es sich zweckmäßig jeweils um ein Spanplattengewinde.

Fig. 3 zeigt eine dritte Phase der Durchsteckmontage der Schraube 16 mit vormontiertem Schallschutzdübel 14 nach Fig. 1, in der der Schallschutzdübel 14 in die Bohrung 30 in dem Gebäudeteil 10 eingeführt ist. Die Schraube 16 befindet sich dabei am Beginn des Eindrehens ihres vorderen Gewindeabschnitts 20 in den Schallschutzdübel 14 und ihres hinteren Gewindeabschnitts 24 in das Loch 28 in dem Bauteil 12. Da die beiden Gewindeabschnitte 20, 24 die gleiche Steigung P aufweisen, ändert sich beim Eindrehen und Anziehen der Schraube 16 der Abstand zwischen dem Bauteil 12 und dem Gebäudeteil 10 nicht. Der bei dem Einrichten des Bauteils 12 für die Montage eingestellte Abstand für die endgültige Einbauposition wird mit der erfindungsgemäßen Verbindung, die mit der Schraube 16 mit dem zugeordneten Schallschutzdübel 14 hergestellt wird, fixiert.

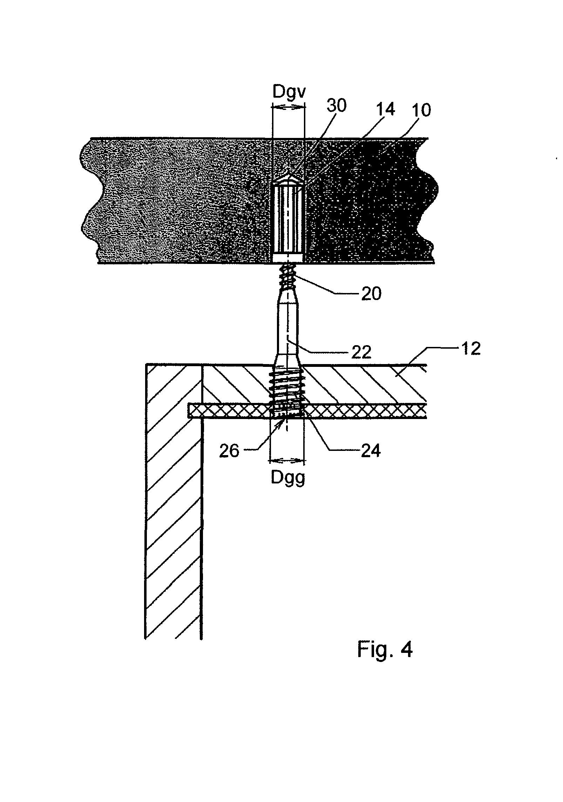

Fig. 4 zeigt eine vierte und letzte Phase der Durchsteckmontage, in welcher die Schraube 16 mit ihren beiden Gewindeabschnitten 20 und 24 in den Schallschutzdübel 14 bzw. in das zu befestigende Bauteil 12 eingeschraubt ist.

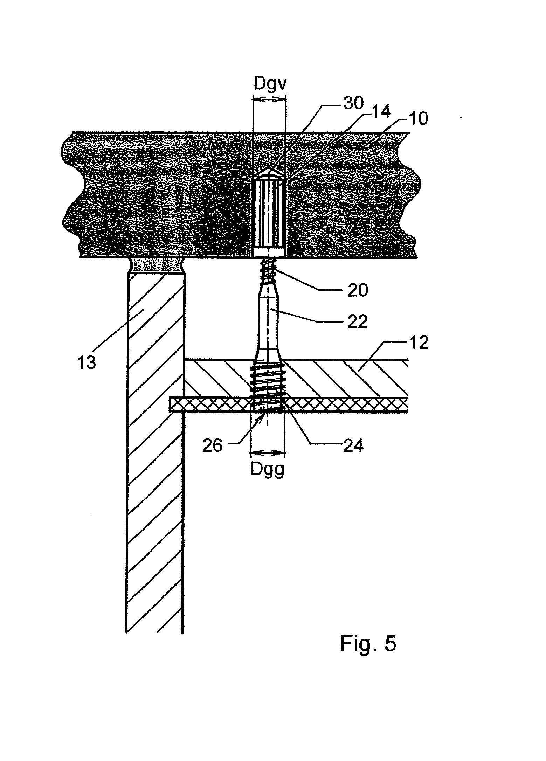

Fig. 5 zeigt die gleiche Verbindung wie in den Fig. 1-4, bei der aber das zu befestigende Bauteil 12 anders ausgebildet ist. Es reicht mit einem Vorsprung 13 bis nahe an den Gebäudeteil 10. Zwischen dem Gebäudeteil 10 und dem Bauteil 12 ist eine Fuge, die mit einem Dichtmittel wie Silikon od. dgl. gefüllt ist. Das kann aus optischen oder hygienischen Gründen notwendig sein, um den Raum zwischen dem Bauteil 12 und dem Gebäudeteil 10 abzuschließen.

Typisch besteht bei den hier beschriebenen Ausführungsbeispielen das Bauteil 12 mindestens teilweise aus einem Holzbaustoff und das Gebäudeteil 10 mindestens teilweise aus einem Steinbaustoff. Die Kombination eignet sich zusammen mit der erfindungsgemäßen Verbindung des Bauteils 12 mit dem Gebäudeteil 10 besonders für Küchen, Bäder und andere Sanitäreinrichtungen. Dabei kann der Gebäudeteil 10 ein Boden, eine Wand oder eine Decke sein. Das Bauteil 12 ist bei den hier beschriebenen Ausführungsbeispielen ein Oberbau- oder ein Unterbau-Möbel einer Küchenkombination.

### Bezugszeichenliste

- 10: Gebäudeteil
- 12: Bauteil
- 13: Vorsprung
- 14: Schallschutzdübel
- 15: Längsrippen
- 16: Schraube
- 18: Schaft
- 20: vorderer Gewindeabschnitt
- 22: gewindefreier Abschnitt
- 24: hinterer Gewindeabschnitt
- 26: Innenkraftangriff
- 28: Loch
- 30: Bohrung
- 32: Füllelement

- Dgk: Außendurchmesser des vorderen Gewindeabschnitts
- Dgg: Außendurchmesser des hinteren Gewindeabschnitts
- Dke: Kerndurchmesser des hinteren Gewindeabschnitts
- Dgw: Durchmesser des gewindefreien Abschnitts
- Dgv: Durchmesser des vorzubohrenden Loches
- P: Steigung
- Dsd: Außendurchmesser des Schallschutzdübels

## Patentansprüche

1. Schraube mit zugeordnetem Dübel zur Verbindung eines Bauteils, insbesondere eines Teils einer Küchenkombination, mit einem Gebäudeteil,
wobei die Schraube einen Schaft mit wenigstens einem angeformten vorderen Gewindeabschnitt zum Eindrehen in den Dübel aufweist und wobei in der Verbindung zwischen dem Bauteil und dem Gebäudeteil eine Schalldämmeinrichtung angeordnet ist,
**dadurch gekennzeichnet, dass** als Schalldämmeinrichtung der Dübel als ein Schallschutzdübel (14) ausgebildet ist,
dass der Schaft (18) einen hinteren Gewindeabschnitt (24) mit größerem Außendurchmesser (Dgg) als der vordere Gewindeabschnitt (20) zum Eindrehen in ein Loch (28) in dem zu befestigenden Bauteil (12) aufweist und
dass der hintere Gewindeabschnitt (24) ebenso wie der vordere Gewindeabschnitt (20) an dem Schaft (18) angeformt ist.

2. Schraube nach Anspruch 1, **dadurch gekennzeichnet, dass** das Verhältnis des Außendurchmessers (Dgg) des hinteren Gewindeabschnittes (24) zu dem Außendurchmesser (Dgk) des vorderen Gewindeabschnittes (20) wenigstens 2:1 beträgt.

3. Schraube nach einem der vorhergehenden Ansprüche, **dadurch gekennzeichnet, dass** der Schaft (18) zwischen den beiden Gewindeabschnitten (20, 24) einen gewindefreien Abschnitt (22) aufweist.

4. Schraube nach Anspruch 3, **dadurch gekennzeichnet, dass** der gewindefreie Abschnitt (22) einen Durchmesser (Dgw) hat, der größer als der Außendurchmesser (Dgk) des vorderen Gewindeabschnittes (20) und kleiner als der Kerndurchmesser (Dke) des hinteren Gewindeabschnittes (24) ist.

5. Schraube nach einem der vorhergehenden Ansprüche, **dadurch gekennzeichnet, dass** der vordere Gewindeabschnitt (20) ein Holz-, Spanplatten- oder Blechgewinde aufweist.

6. Schraube nach einem der vorhergehenden Ansprüche, **dadurch gekennzeichnet, dass** der hintere Gewindeabschnitt (24) ein Holz-, Spanplatten- oder Blechgewinde aufweist.

7. Schraube nach einem der vorhergehenden Ansprüche, **dadurch gekennzeichnet, dass** die Gewindeabschnitte (20, 24) die gleiche Steigung (P) aufweisen.

8. Schraube nach einem der vorhergehenden Ansprüche, **dadurch gekennzeichnet, dass** der Schallschutzdübel (14) auf der Schraube (16) vormontiert ist.

9. Verbindung zwischen einem Bauteil und einem Gebäudeteil, **dadurch gekennzeichnet, dass** die Verbindung mit einer Schraube (16) und einem Schallschutzdübel (14) nach einem der vorhergehenden Ansprüche hergestellt ist.

10. Verbindung nach Anspruch 9, **dadurch gekennzeichnet, dass** ein Loch (28) für den hinteren Gewindeabschnitt (24) der Schraube (16) in dem Bauteil (12) mit einem Durchmesser (Dgv) vorgebohrt worden ist, der höchstens gleich dem Außendurchmesser (Dsd) des Schallschutzdübels (14) ist, und dass eine Bohrung (30) in dem Gebäudeteil (10) für den Schallschutzdübel (14) einen Durchmesser hat, der gleich dem Durchmesser (Dgv) des Loches (28) in dem Bauteil (12) ist.

11. Verbindung nach einem der vorhergehenden Ansprüche, **dadurch gekennzeichnet, dass** sie an einem Gebäudeteil (10) hergestellt ist, das mindestens teilweise aus einem Steinbaustoff besteht.

12. Verbindung nach einem der vorhergehenden Ansprüche, **dadurch gekennzeichnet, dass** sie an einem Bauteil (12) hergestellt ist, das mindestens teilweise aus einem Holzbaustoff besteht.

13. Verbindung nach Anspruch 12, **dadurch gekennzeichnet, dass** das Bauteil (12) ein Oberteil oder Unterteil einer Küchenkombination ist.
